# EUROPEAN PATENT APPLICATION

(11) **EP 4 649 812 A1**
(43) Date of publication of application: **19.11.2025**
(21) Application number: 24315236.0
(22) Date of filing: 16.05.2024
(51) Int. Cl.: A01D 46/26, A01D 46/28

(54) **A SHAKER ASSEMBLY FOR A FRUIT HARVESTER**

(71) Applicant: CNH Industrial France S.A.S., 91150 Morigny-Champigny (FR)
(72) Inventor: Paquereau, Cyrille, 91150 Morigny-Champigny (FR); Metayer, Raphaël, 91150 Morigny-Champigny (FR); Beleteau, David, 91150 Morigny-Champigny (FR); Le Brech, Laurent, 91150 Morigny-Champigny (FR); Desnoyer, Clément, 91150 Morigny-Champigny (FR)
(74) Representative: CNH Industrial IP Department

(57) **Abstract**

The present invention relates to a shaker assembly comprising a support (5,5') provided with at least one cavity (10) and at least one shaker rod (3) configured to be clamped into said cavity. The cavity comprises an entry portion (11) and a clamping portion (12), oriented along different angles and partly overlapping each other. The entry portion (11) is shaped and dimensioned to enable sliding the rod (3) into and out of said entry portion, while the clamping portion (12) is shaped and dimensioned to clamp the rod by a radial clamping force. The cavity (10) further comprises at least one bottleneck area (13) that is narrower than the shaker rod (3), enabling to move the rod from the entry portion (11) to the clamping portion (12) or vice versa by tilting the rod between said different angles, thereby forcing the rod to pass through said bottleneck area or areas (13).

## Description

### Field of the Invention

The present invention is related to mechanical fruit harvesters, in particular to shaker arrangements provided in fruit harvesters and to the assembly of a support and one or more shaker rods attached to said support.

### State of the art.

Shaker arrangements for detaching fruit from fruit trees or plants are commonly used in currently known self-propelled fruit harvesters. Various configurations exist, depending on the type of fruit that is being harvested, but a common aspect in many systems is the presence of shaker rods attached to a support that is coupled to a shaking actuator. For the harvesting of berries of various types, a well-known configuration includes vertical poles with ring-shaped supports mounted thereon and with shaker rods attached to the supports and extending radially outward from said supports. Usually two such shaker poles are mounted side by side and the harvester is driven along a row of fruit trees which pass between the two adjacent poles. The poles and thereby the shaker rods are subjected to a shaking movement that detaches fruit from the trees substantially without damage to the fruit.

Another arrangement, used in grape harvesting, applies horizontally oriented shaker rods subjected to a sideways shaking movement. The rods are attached to a shaking support at one end and to a hinge at the other end.

The shaker rods are often formed of synthetic material and attached to the supports by various mechanical connections which may include bolt connections or similar mechanical connection means. As the shaker rods are subjected to heavy loads and impacts however, they need to be replaced regularly. In presently known arrangements, the removal and replacement of shaker rods is usually a laborious and time-consuming effort that may require specific tools.

An arrangement that enables a quicker replacement of shaker rods in various harvester configurations is therefore desirable.

### Summary of the invention

The invention is related to a shaker assembly for use in a fruit harvester, and to fruit harvesters equipped with such a shaker assembly, in accordance with the appended claims. The shaker assembly comprises a support provided with at least one cavity and at least one shaker rod configured to be clamped into said cavity. The cavity comprises an entry portion and a clamping portion, oriented along different angles and partly overlapping each other. The entry portion is shaped and dimensioned to enable sliding the rod into and out of said entry portion, while the clamping portion is shaped and dimensioned to clamp the rod by a radial clamping force. The cavity further comprises at least one bottleneck area that is narrower than the shaker rod, enabling to move the rod from the entry portion to the clamping portion or vice versa by tilting the rod between said different angles, thereby forcing the rod to pass through said bottleneck area or areas. The bottleneck area or areas are located between non-overlapping parts of the entry portion and the clamping portion. The fact that the bottleneck area is narrower than the rod implies that the passage of the rod through the bottleneck area involves an elastic deformation of the rod and/or of the material of the support in the vicinity of the bottleneck area.

The invention enables easily mounting and removing a shaker rod to or from the support, preferably applying only manual force. The invention is applicable to shaker arrangements of various types, including arrangements wherein the support is a ring-shaped support provided with multiple cavities along its outer circumference, configured to receive therein multiple rods for clamping these rods in radially extending directions relative to the support.

The invention is related to a fruit harvester comprising one or more shaker assemblies in accordance with the invention and to methods for attaching or releasing a shaker rod in an assembly according to the invention.

### Brief description of the figures

Figure 1 illustrates a front view and top section view of a shaker arrangement in a fruit harvester as presently known in the art.
Figures 2a and 2b illustrate a first embodiment according to the invention in the form of a ring-shaped support that enables manually attaching a shaker rod thereto.
Figures 3 and 4 illustrate how a shaker rod may be attached to the support shown in Figures 2a and 2b.
Figure 5 illustrates a detail of how a round shaker rod is clamped in the support illustrated in Figures 2a and 2b.
Figures 6 and 7 illustrate 3D images of the assembly of a shaker rod to a ring-shaped support.
Figures 8 to 10 illustrate how the shaker rods, when attached to the support shown in Figures 6 and 7, may be secured by a securing strip.
Figure 11 illustrates a ring-shaped support according to another embodiment of the invention.
Figures 12 and 13 illustrate the attachment of a shaker rod to the support shown in Figure 10.
Figures 14 and 15 illustrate an embodiment of the invention that is applicable in grape harvesting arrangements.

### Detailed description of preferred embodiments of the invention

Preferred embodiments will now be described with reference to the drawings. The detailed description is not limiting the scope of the invention, which is defined only by the appended claims.

One prior art fruit harvesting system will be briefly described first, followed by a description of how embodiments of the invention can be implemented in this known system. The invention can however also be applied to other harvesting systems, as will be described further in this text.

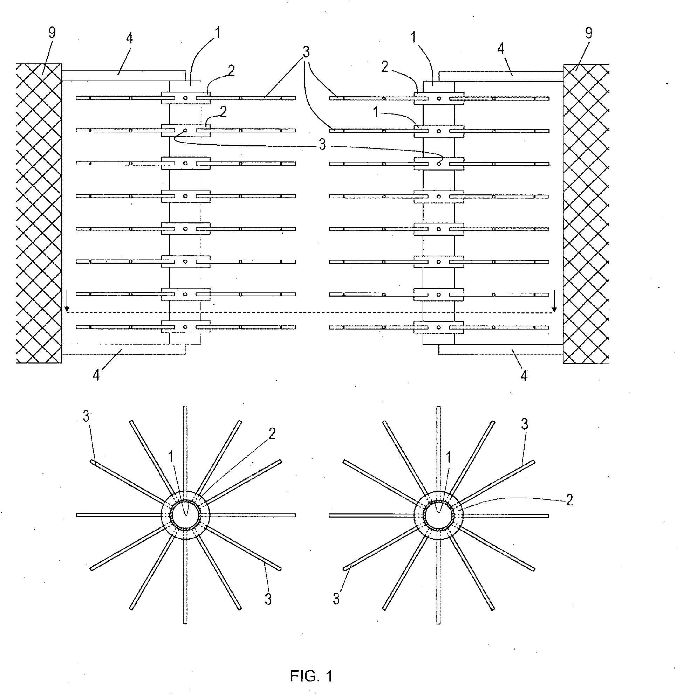

The fruit harvesting arrangement illustrated in Figure 1 is well-known in the art for harvesting berries and similar fruit types. The arrangement includes two vertically mounted poles 1, with a plurality of ring-shaped supports 2 fixed thereon at regular intervals along the height of the poles 1. To each support 2, a number of shaker rods 3 is attached, wherein the rods 3 are distributed at regular angular intervals and extending radially outward from the supports 2. In the embodiment shown, the orientation of the rods 3 is the same for all the supports 2 mounted on the same pole 1, but it is known also to vary the orientation of the rods 3, for example according to a helicoidal path from the bottom of the poles 1 to the top.

The poles 1 are supported by support arms 4 at the bottom and the top. These support arms are coupled a shaking actuator 9, not represented in detail in the drawings but known as such in the art. The actuator 9 is configured to subject the poles 1 to shaking movements in one or more directions.

The shaker arrangement is mounted on the chassis of a harvester in a manner known in the art, enabling the harvester to drive through a field comprising rows of fruit trees, in such a manner that the trees pass in between the poles 2 and the shaking rods 3. The shaking movement of the rods 3 detaches bunches of berries from the trees without substantial damage to the fruit. The berries are collected by containers mounted on a conveyor system (not shown), and transported thereon for further processing of the fruit.

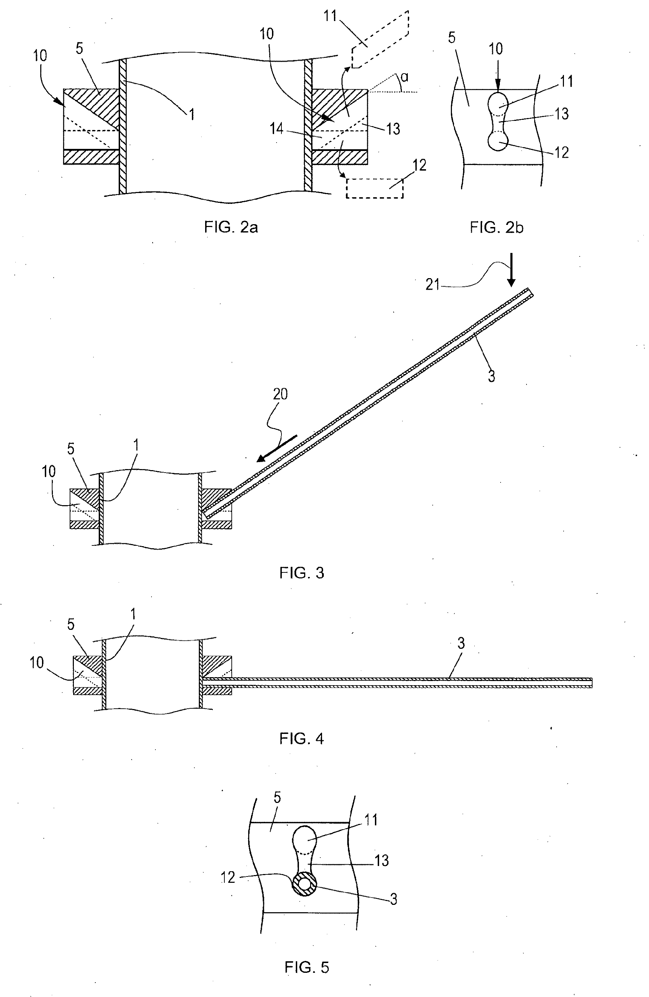

An embodiment according to the invention that is applicable in a configuration as the one shown in Figure 1 is illustrated in Figures 2a and 2b. Figure 2a is a section view of one ring-shaped support 5 mounted on a vertical pole 1. The pole 1 is a hollow tube in this case, but it could also be a solid body of elongate shape, preferably but not necessarily having a circular cross-section.

The support 5 is fixed to the pole 1 in any suitable manner, possibly in a manner known as such in the art, and the way in which this is done is not shown in detail in Figures 2a and 2b. The support 5 comprises a number of cavities 10 distributed at regular angular intervals along the circumference of the support. The section view in Figure 2a shows two of these cavities 10, lying opposite each other. For realizing a configuration as shown in Figure 1, a total of 12 cavities 10 is required, spaced apart by angular intervals of about 30°. However, the number of cavities and their angular position may be different according to other embodiments.

As seen in Figures 2a and 2b, the cavity 10 has a specific inner shape, defined by an entry portion 11, a clamping portion 12 and a bottleneck area 13. The entry portion 11 and the clamping portion 12 are partly overlapping each other in a corner area 14 of the cavity 10. The entry portion 11 and the clamping portion 12 extend in respective longitudinal directions oriented at an angle α of about 35° relative to each other, and the bottleneck area 13 is situated roughly between the non-overlapping parts of these cavity portions 11 and 12. Other values of the angle α are possible besides the value of 35°. The side view of one cavity 10 shown in Figure 2b illustrates the relative position of the above-described cavity parts 11,12,13, as seen from the side of the support 5.

The entry portion 11 is shaped and dimensioned internally in such a manner that a shaker rod 3 can be inserted into said entry portion 11 in the direction of the arrow 20 illustrated in Figure 3, i.e. with the rod 3 oriented at the inclination angle α of said entry portion 11 relative to the horizontal direction. The shaker rod 3 in this particular embodiment is a tube-shaped rod having a round cross-section, but the invention is not limited thereto.

The bottleneck area 13 is narrower than the shaker rod 3, so that the rod cannot pass from the entry portion 11 to the clamping portion 12 without an externally applied force that forces the rod to pass through the bottleneck area 13. The clamping portion 12 is dimensioned so that once the rod is placed therein, it is clamped by a radial clamping force, i.e. acting on the rod in the radial direction of the rod.

Figure 3 illustrates the end of the rod 3 being inserted fully into the cavity 10 and contacting the outer surface of the pole 1. This is because the cavity 10 passes through the full radial width of the support 5 in this case, i.e. from the outer diameter of the support to the inner diameter. According to other embodiments, the cavity 10 could have a depth that falls short of the support's inner diameter.

After the rod 3 has been fully inserted in the cavity 10 as shown in Figure 3, it is pushed downward at a given distance from the cavity 10, preferably close to the opposite end of the rod 3, as illustrated by the arrow 21, to thereby force the rod to pass through the bottleneck area 13. In this embodiment, which is not limiting the scope of the invention, the material of the ring-shaped support 5 in the vicinity of the bottleneck area 13 is less deformable by elastic deformation than the material of the shaker rod 3. For example, the support 5 may be formed of a metal such as aluminium, while the rod 3 may be formed of a synthetic material. The rod may for example be a tube formed of polyamide. The dimensions of the rod may be in accordance with known shaker rods, for example a tube having an inner diameter of about 22 mm and an outer diameter of about 26 mm.

As the tube-shaped rod 3 is more elastically deformable than the support 5, the rod is elastically compressed as it passes through the bottleneck area 13, under the influence of the moment realized by the downward force exerted on the rod. When it has passed through the bottleneck area 13, the rod returns to its non-deformed state and is thereby clamped within the clamping portion 12 and oriented in the longitudinal direction thereof, as shown in Figure 4. As shown in Figure 5, the clamping portion 12 is dimensioned so that the sidewalls of the cavity are tightly fitted around the rod 3, thereby exerting a radial clamping force on the rod.

Releasing the rod 3 from the cavity 10 is done by tilting the rod upwards (opposite arrow 21) until it is forced out of the clamping portion 12 of the cavity and back into the entry portion 11, after which the rod can be slid out of the cavity, in the direction opposite to the direction indicated by the arrow 20 in Figure 3. Preferred embodiments are configured so that the above-described attachment and release sequences can be done using only manual force. The invention thereby enables the easy and quick replacement of the shaker rods 3.

In the embodiment described so far, the clamping force exerted on the rod 3 when it is clamped by the cavity's clamping portion 12 is the only force that keeps the rod in place during harvesting. When the rod 3 and the cavity 10 are correctly dimensioned and when the rod 3 and the support 5 are formed of appropriately chosen materials, this suffices to maintain the rod in place during an average harvesting run. However, it is always possible that an excessive force is exerted on the rod during harvesting, which may be sufficient to tilt the rod out of its clamped position.

In order to avoid such an unwanted release, an additional securing means may be added in the form of a stopper that prevents the rods from moving from the clamping portion 12 of the cavity to the entry portion 11.

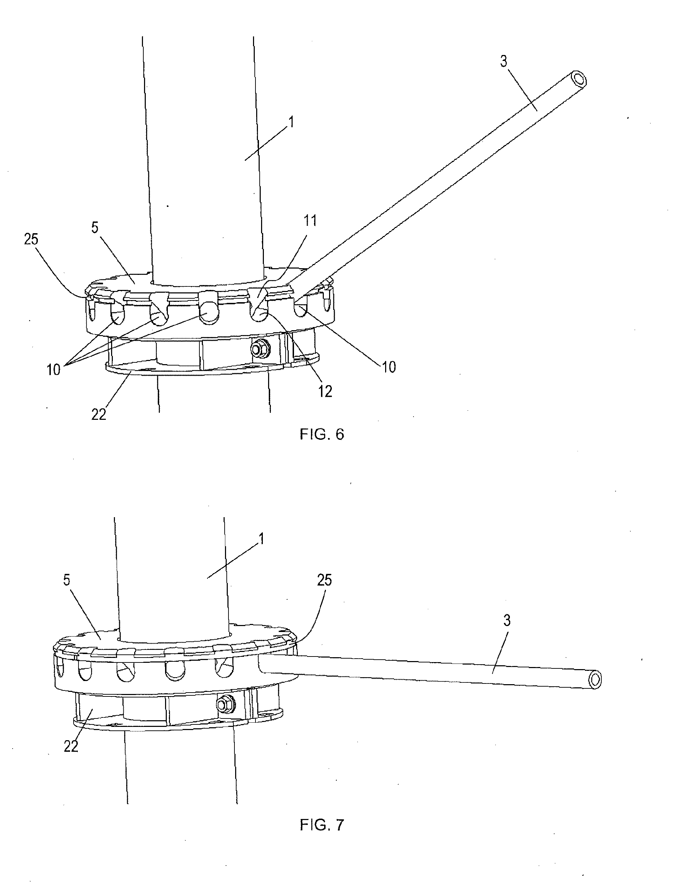

An example of such a stopper is illustrated with reference to Figures 6 to 10. Figures 6 and 7 again illustrate the assembly of a shaker rod 3 into a ring-shaped support 5 mounted on a vertical pole 1 in accordance with an embodiment of the invention. In this particular case, the support 5 is mounted on a plate metal platform 22 fixed to the pole 1 but other ways of fixing the support 5 to the pole 1 are possible. These 3D images illustrate the location of the other cavities 10 besides the cavity into which a rod 3 is being inserted. This process is repeated for all the cavities 10 until each cavity is provided with a shaker rod 3.

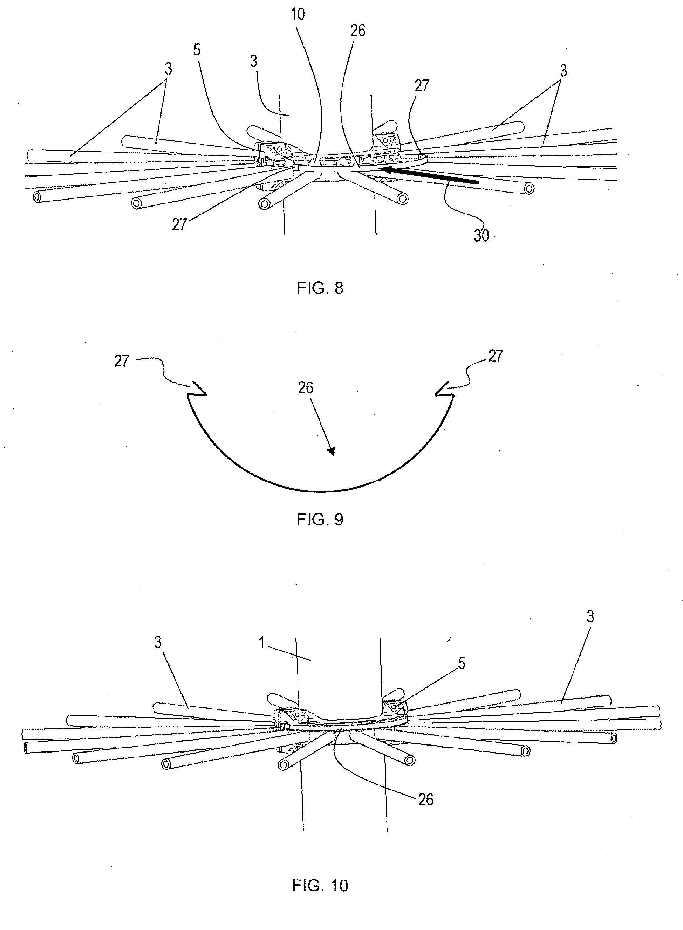

In addition, it is seen that a circumferential groove 25 is provided in the external sidewall of the support 5. The groove 25 intersects the inlet section of the cavity 10, in particular the inlet section of the cavity's entry portion 11. In the case shown, the groove 25 extends along the entire circumference of the support 5. As illustrated in Figure 8, after all the rods 3 have been assembled on the support, a half-ring shaped securing strip 26 is placed into the groove 25, in the direction of the arrow 30. The strip 26 may be formed of a metal or a material comparable thereto in terms of stiffness and rigidity. The strip 26 is dimensioned so that it fits within the groove 25 with a small clearance that allows the strip to be pushed into the groove without difficulty. A plane view of the strip 26 is shown in Figure 9. The strip 26 comprises elastically deformable clipping portions 27 at its outer ends, which can be hooked behind the sidewalls of two of the cavities 10. The strip 26 thereby secures the rods 3 on one side of the support 5, as illustrated in Figure 10. A second strip (not visible in Figure 10) is then provided for securing the rods on the opposite side of the support 5. Once in place, and due to the location of the groove 25 relative to the clamping portion 12 of the cavities 10, the securing strips 26 obstruct the upward tilting of the rods 3, thereby preventing any unwanted release of the rods even when excessive force is applied thereon during harvesting.

The clipping portions 27 enable manually mounting the securing strips 26. Releasing the strips 26 can also be done manually or with the help of a simple tool such as a screwdriver for deforming the clipping portions 27, depending on the stiffness of said clipping portions 27. In any case, the invention is not limited to embodiments including an additional stopper (like the strips 26) for preventing the unwanted release of the rods 3, nor to embodiments wherein said additional stopper can be mounted and released manually. Other types of additional stopper mechanisms can be provided in stead of the securing strips 26.

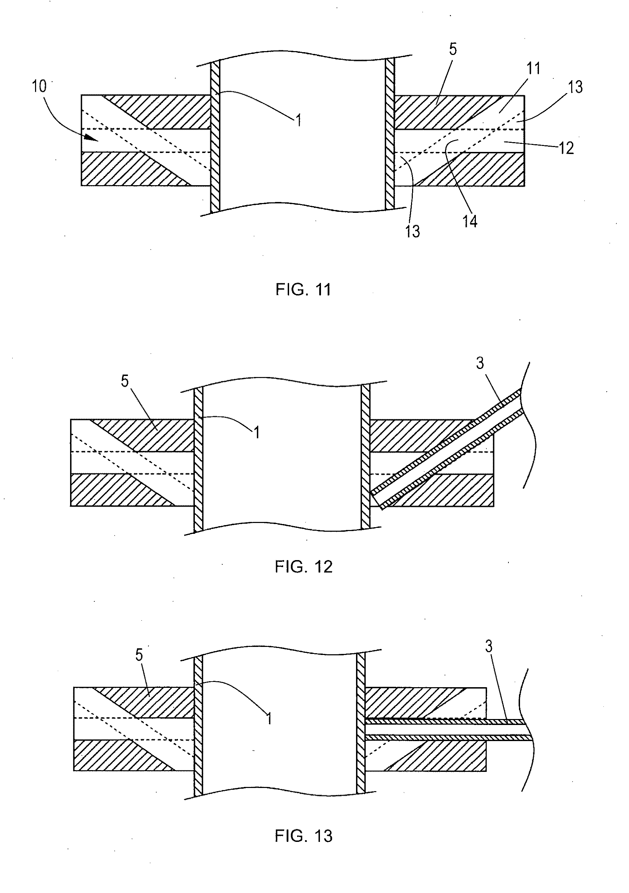

Figure 11 illustrates another embodiment applicable to the same type of fruit harvesting system as shown in Figure 1, i.e. including ring-shaped supports with radially oriented rods attached thereto. In this case, each cavity 10 comprises two bottleneck areas 13, one on each side of the overlap area 14 between the entry portion 11 and the clamping portion 12 of the cavity. The entry and clamping sequence of the rods is illustrated in Figures 12 and 13. Tilting the rod 3 to the horizontal position now forces the rod to pass through both bottleneck areas 13 at the same time, before being clamped into the clamping portion 12 of the cavity 10. This embodiment provides additional clamping security compared to the embodiment of Figures 2 to 5. An additional stopper, such as the securing strips shown in Figures 8 to 10 may be included also in embodiments having these two bottleneck areas in the cavities 10.

The orientation of the shaker rods 3 in the clamped position is horizontal in the embodiments described so far, but this is not necessarily the case, nor is the orientation of the rods necessarily the same along the height of the poles 1. This orientation depends on the orientation of the entry portion 11 and the clamping portion 12 of the cavity 10, but these orientations may be designed according to any required design of the shaker arrangement, as long as a tilting angle between these two portions is available, thereby enabling to tilt the rod from the entry angle to the clamping angle. For example, the entry portion 11 could be oriented horizontally, enabling to insert the rod horizontally and thereafter tilt it upward or downward depending on the orientation of the clamping portion 12.

In stead of a compressible rod 3 inserted into a rigid support 5, the inverse situation may be implemented, i.e. the rod 3 is more rigid than the material of the support 5, and by forcing the rod past the bottleneck portion 13, it is the material of the support 5 that is elastically deformed. The deformation is elastic so that after the passage of the rod, the support 5 firmly clamps the rod 3 into the clamping position.

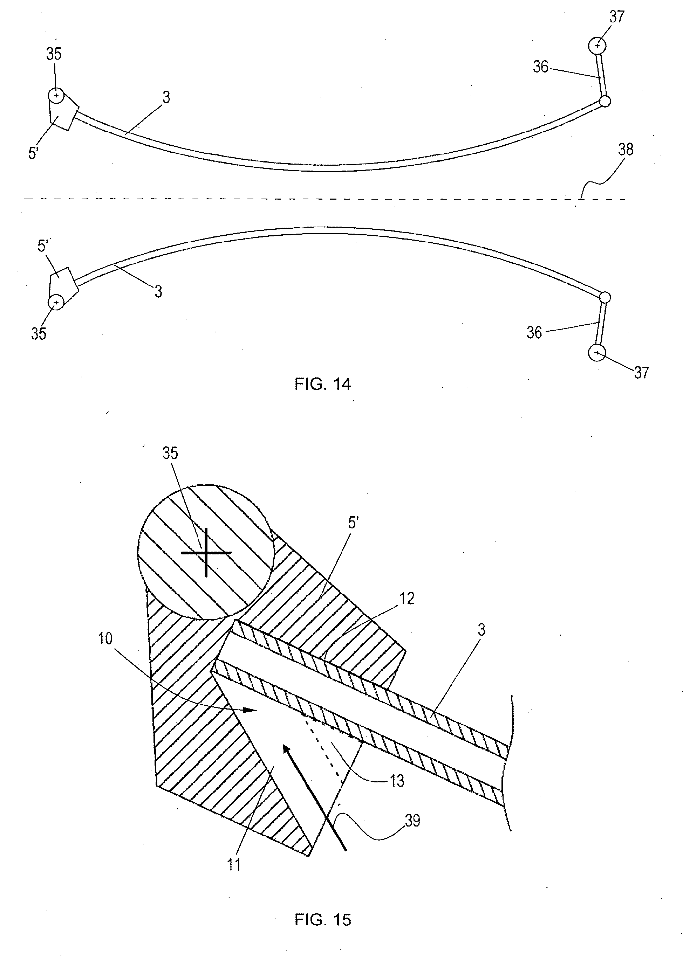

As stated above, the invention is not limited to shaker arrangements including radially oriented shaking rods. Figure 14 illustrates two shaker rods 3 in a shaker arrangement for a grape harvester, as seen from a viewpoint above the arrangement. The general principle of this type of arrangement is known as such. Shaker rods 3 are attached at one end to a support 5' that is pivotable about a pivot axis 35, relative to the chassis (not shown) of the harvester. At the other end, the rods 3 are pivotably coupled to hinge arms 36 which are equally pivotable about pivot axes 37 relative to the chassis. The supports 5' are actively pivoted back and forth wherein supports on opposite sides of the centre line 38 of the arrangement are pivoted in counterphase. The harvester advances through a field in such a manner that grapevines pass in between the oppositely arranged rods 3, several of which are mounted in vertical arrays on both sides of the centre line 38.

As illustrated in the detailed section view of one of the supports 5' in Figure 15, the shaker rod 3 is attached to the support 5' in the same way as described above for the radial shaking rod arrangements : the support 5' comprises a cavity 10 having an entry portion 11 and a clamping portion 12, with a bottleneck area 13 arranged between non-overlapping parts of said cavity portions. The rod 3 is inserted in the direction of the arrow 39, into the entry portion 11 of the cavity, and then tilted so as to force the rod to become fitted into the clamping portion 12 as it passes through the bottleneck area 13.

## Claims

1. A shaker assembly for use in a fruit harvester, the assembly comprising a support (5,5') configured to be coupled to a shaking actuator, and at least one shaker rod (3), **characterized in that** the support (5,5') comprises at least one cavity (10) wherein :
- the internal shape of the cavity (10) defines an entry portion (11) and a clamping portion (12) of the cavity (10), said portions extending along respective longitudinal directions, said portions furthermore partly overlapping each other in an overlap area (14) of the cavity (10),
- the entry portion (11) is oriented at a first angle relative to the support (5,5') and the clamping portion (12) is oriented at a second angle relative to the support, the second angle being different from the first angle,
- the entry portion (11) is dimensioned so as to allow sliding an end of the shaker rod (3) into and out of said entry portion along the longitudinal direction thereof,
- the clamping portion (12) is dimensioned so as to clamp said end of the shaker rod (3) by a radial clamping force,
- the cavity (10) further comprises at least one bottleneck area (13) that is narrower than the shaker rod (3), enabling to move the rod from the entry portion (11) to the clamping portion (12) or vice versa by tilting the rod between said first and second angles, thereby forcing the rod to pass through said bottleneck area or areas (13).

2. The shaker assembly according to claim 1, wherein the cavity (10) and the shaker rod (3) are configured so that attaching or releasing the shaker rod (3) to or from the support (5,5') can be performed by manual force.

3. The shaker assembly according to claim 1 or 2, further comprising a removable stopper (26) for preventing the shaker rod (3) from moving from the clamping portion (12) to the entry portion (11) of the cavity (10).

4. The shaker assembly according to any one of the preceding claims, wherein the shaker rod (3) is more deformable elastically than the material of the support (5,5') in the vicinity of the bottleneck area or areas (13), so that the passage of the rod through the bottleneck area or areas occurs primarily through an elastic compression of the rod.

5. The shaker assembly according to any one of claims 1 to 3, wherein the material of the support (5,5') in the vicinity of the bottleneck area or areas (13) is more elastically deformable than the shaker rod (3), so that the passage of the rod through the bottleneck area or areas occurs primarily through an elastic deformation of said material of the support in the vicinity of the bottleneck area or areas.

6. The shaker assembly according to any one of the preceding claims, wherein the support is a ring-shaped support (5) provided with several of said cavities (10) distributed along the circumference of said ring-shaped support and with respective rods (3) configured to be inserted and clamped into said cavities.

7. The shaker assembly according to claim 6, further comprising one or more removable stoppers (26), each stopper being configured to prevent a plurality of the rods (3) from moving from the clamping portion (12) to the entry portion (11) of the respective cavities (10).

8. The shaker assembly according to claim 7, wherein the support (5) comprises a circumferential groove (25) intersecting an inlet section of the entry portions (11) of the cavities (10), and wherein the one or more stoppers are provided in the form of one or more securing strips (26) configured to be placed in said circumferential groove (25), and secured to the support (5).

9. The shaker assembly according to claim 8, wherein the one or more securing strips (26) are provided with clipping portions (27) configured to be hooked to a sidewall of one of the cavities (10).

10. A fruit harvester comprising one or more shaking actuators and multiple shaker assemblies according to any one of the preceding claims.

11. A fruit harvester comprising multiple shaker assemblies according to any one of claims 6 to 9, the harvester comprising at least one vertically arranged pole (1) coupled to a shaking actuator (9), wherein multiple of said ring-shaped supports (5) with rods (3) attached thereto are mounted on said pole (1) along the height of the pole.

12. A grape harvester comprising multiple shaker assemblies according to any one of claims 1 to 5, each assembly comprising a support (5') and a shaker rod (3) attached thereto, wherein the shaker rods (3) are mounted horizontally between the respective supports (5') on one side and a hinge arm (36) on the other side and wherein said assemblies are mounted on both sides of a centre line (38).

13. A method for assembling a shaker assembly according to any one of claims 1 to 9, the method comprising the steps of :
- inserting the shaker rod (3) into the cavity (10) by sliding an end of the rod into the entry portion (11) of the cavity, so that said end of the rod is oriented according to said first angle,
- thereafter, tilting the rod (3) from the first angle to the second angle by exerting a force on the rod at a position lying at a distance from the cavity (10), said force being high enough to force the rod to pass through said bottleneck area or areas (13).

14. A method for releasing a shaker rod (3) from a shaker assembly according to any one of claims 1 to 9, the method comprising the steps of :
- tilting the rod (3) from the second angle to the first angle by exerting a force on the rod, at a position lying at a distance from the cavity (10), said force being high enough to force the rod to pass through said bottleneck area or areas (13),
- removing the rod (3) by sliding it out of the entry portion (11) of the cavity (10).

15. The method according to claim 13 or 14, wherein said assembly or removal of the shaker rod (3) is done by manual force alone.
